# EUROPEAN PATENT SPECIFICATION

(11) **EP 3 435 181 B1**
(45) Date of publication and mention of the grant of the patent: **14.04.2021**
(21) Application number: 18185219.5
(22) Date of filing: 24.07.2018
(51) Int. Cl.: G05B 19/042, G06Q 10/00

(54) **PORTABLE RECORDING APPARATUS TO BE USED FOR RECORDING INSPECTION RESULT FOR HYDROGEN STATION**
TRAGBARE AUFZEICHNUNGSVORRICHTUNG ZUR AUFZEICHNUNG EINES INSPEKTIONSERGEBNISSES FÜR EINE WASSERSTOFFTANKSTELLE.
APPAREIL D'ENREGISTREMENT PORTABLE DESTINÉ À ÊTRE UTILISÉ POUR L'ENREGISTREMENT DE RÉSULTATS D'INSPECTION POUR UNE STATION D'HYDROGÈNE

(30) Priority: 28.07.2017 JP 2017146755
(43) Date of publication of application: 30.01.2019
(73) Proprietor: Kabushiki Kaisha Kobe Seiko Sho (Kobe Steel, Ltd.), Kobe-shi, Hyogo, 651-8585 (JP)
(72) Inventor: FUKUDA, Takayuki, Takasago-shi, Hyogo 676-8670 (JP); NAGURA, Kenji, Takasago-shi, Hyogo 676-8670 (JP); HASHIMOTO, Koichiro, Takasago-shi, Hyogo 676-8670 (JP)
(74) Representative: TBK

(56) References cited:
- EP-A2- 0 892 326
- WO-A2-2006/101944
- US-A1- 2010 302 375
- US-A1- 2014 207 417

## Description

### Technical Field

The present invention relates to a portable recording apparatus to be used for recording an inspection result for a hydrogen station.

### Background Art

A hydrogen station includes various devices such as a compressor unit, a refrigerator, an accumulator unit and a dispenser (c.f. JP 2016-133142 A). Meters are mounted onto each of those devices. An inspector records numerical values indicated by the meters regularly to inspect whether there is any trouble happening to those devices. The inspector has to inspect not only portions onto which those meters are mounted but also predetermined inspection points (c.f. leakage of gas or liquid from pipes). Further prior art can be found in document US 2014 207417 A1 which discloses a realtime inspection management.

Conventionally, an inspector records an inspection result on recording paper. Since the inspector has to inspect various portions of the hydrogen station as described above, the inspector may occasionally make erroneous recording or fail to inspect a portion which should be inspected. For example, the inspector may record a numerical value indicated by a "meter A" on a recording section for a "meter B" different from the "meter A". Or, the inspector may notice a blank recording section after finishing all steps of a given inspecting process. In this case, the inspector may be required to perform the inspecting process all over again. Such human error in an inspection is more likely to occur if meters and inspection points are densely arranged.

### Summary of Invention

It is an object of the present invention to provide a recording apparatus which reduces a risk of human error in an inspection.

A portable recording apparatus according to one aspect of the present invention is used for recording an inspection result for a hydrogen station. The recording apparatus includes: an image generator configured to generate an input image, which is configured to receive an input of the inspection result, and a circuit configuration image which represents a part of a circuit configuration in the hydrogen station; a display portion configured to display the input image and the circuit configuration image; and a storage in which the inspection result is stored, the inspection result having been input by using the input image which is displayed on the display portion. The input image shows icons representing predetermined inspection points in the hydrogen station, respectively, and input windows displayed in correspondence to the inspection points, respectively. When one of the inspection points displayed on the display portion is designated under an operation for one of the icons, the image generator generates the circuit configuration image so that the designated inspection point is displayed on the display portion as the part of the circuit configuration.

The aforementioned recording apparatus may reduce a risk of human error in an inspection.

The object, features, and advantages of the aforementioned recording apparatus will be made more apparent by the following detailed description and accompanying drawings.

### Brief Description of Drawings

FIG. 1 is a block diagram showing a schematic functional configuration of an exemplary recording apparatus;
FIG. 2A shows an exemplary image displayed on a display portion of the recording apparatus;
FIG. 2B shows another image displayed on the display portion;
FIG. 3 shows an exemplary input image for a compressor of a hydrogen station;
FIG. 4 shows an image which is displayed on the display portion when a position button image in the input image is pressed;
FIG. 5 shows another input image which is displayed on the display portion when a completion button image in the input image is pressed;
FIG. 6 is a schematic flow chart showing exemplary operations of the recording apparatus; and
FIG. 7 is a schematic flow chart showing exemplary operations of an operation controller of the recording apparatus.

### Description of Embodiments

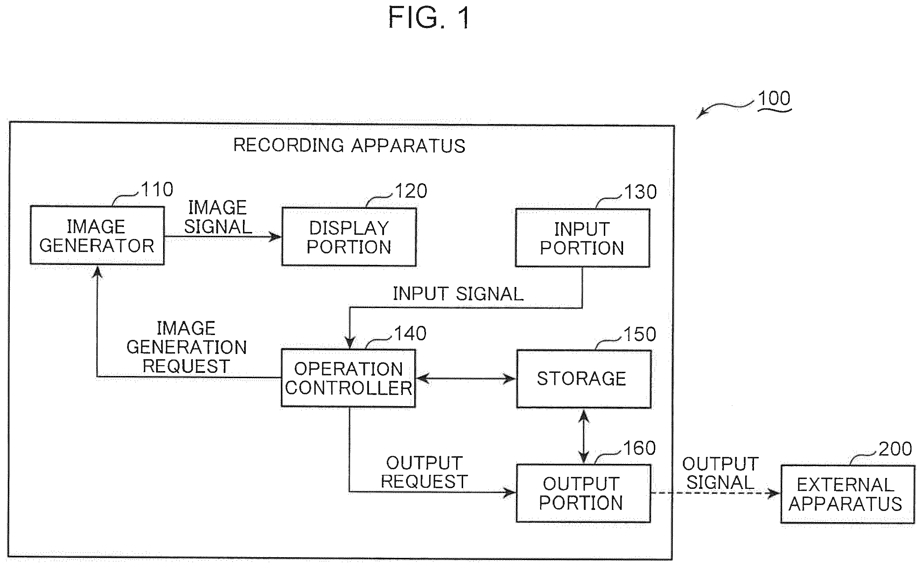

FIG. 1 is a block diagram showing a schematic functional configuration of an exemplary recording apparatus 100. The recording apparatus 100 is described with reference to FIG. 1.

The recording apparatus 100 is a portable apparatus to be used for recording a result of an inspection performed on a hydrogen station (not shown). The recording apparatus 100 may be a tablet, a smartphone or a laptop personal computer.

An inspection result which is input into the recording apparatus 100 is output to an external apparatus 200 situated away from the recording apparatus 100. The external apparatus 200 may be a printer or a computer server.

The inspection result may be output from the recording apparatus 100 to the external apparatus 200 in the form of a wireless signal. Alternatively, an inspection result may be output from the recording apparatus 100 to the external apparatus 200 through a signal cable connected to the recording apparatus 100 and the external apparatus 200.

The recording apparatus 100 includes an image generator 110, a display portion 120, an input portion 130, an operation controller 140, a storage 150 and an output portion 160. When the recording apparatus 100 is activated, the operation controller 140 requests the image generator 110 to generate a predetermined image. The image generator 110 generates an image signal representing an image in response to the request from the operation controller 140. The image signal is output from the image generator 110 to the display portion 120.

If the recording apparatus 100 is a tablet or a smartphone, the display portion 120 and the input portion 130 may form a touch panel. If the recording apparatus 100 is a laptop personal computer, the display portion 120 may be a computer monitor, and the input portion 130 may be a keyboard.

The display portion 120 displays various images in response to image signals. An inspector viewing those images may check an inspection point and operate the input portion 130 to input an inspection result. When the inspector operates the input portion 130, the input portion 130 generates an input signal indicating what is input by the inspector. The input signal is output from the input portion 130 to the operation controller 140. The operation controller 140 refers to the input signal to determine what the inspector requests or whether or not a process of inputting an inspection result is completed. When the inspector operates the input portion 130 to make a request for display of an image to be used for inspecting a compressor of the hydrogen station, the operation controller 140 requests the image generator 110 to generate an image for the compressor. When the inspector operates the input portion 130 to finish inputting the inspection result, the operation controller 140 writes the inspection result into the storage 150. When the inspector operates the input portion 130 to make a request for output of the inspection result to the external apparatus 200, the operation controller 140 may request the output portion 160 to output the inspection result. Alternatively, the operation controller 140 may request the output portion 160 to output the inspection result in response to completion of input of the inspection result. In this case, the inspection result is automatically output from the output portion 160 to the external apparatus 200 without any operation being performed on the input portion 130 by the inspector.

As described above, the inspection result is written into the storage 150 by the operation controller 140. Accordingly, the storage 150 may hold the inspection result. In addition, the storage 150 may hold image data which is necessary for the image generator 110 to generate an image signal. In this case, the image data is read out from the storage 150 by the operation controller 140. The read image data is output from the operation controller 140 to the image generator 110 together with an image generation request which requests generation of an image signal, or as the image generation request. The image generator 110 uses the image data to generate an image signal representing an image which is requested by the image generation request.

The operation controller 140 has not only a function of outputting the image data to the image generator 110 but also a function of outputting an output request which requests output of the inspection result. The output request is output from the operation controller 140 to the output portion 160. The output portion 160 reads out the inspection result from the storage 150 in response to the output request. The output portion 160 generates an output signal indicating the read inspection result. The output signal is output from the output portion 160 to the external apparatus 200.

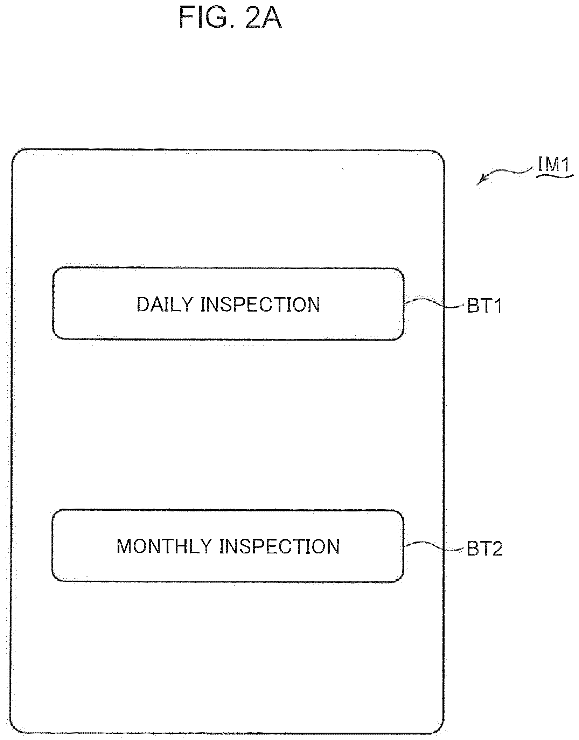

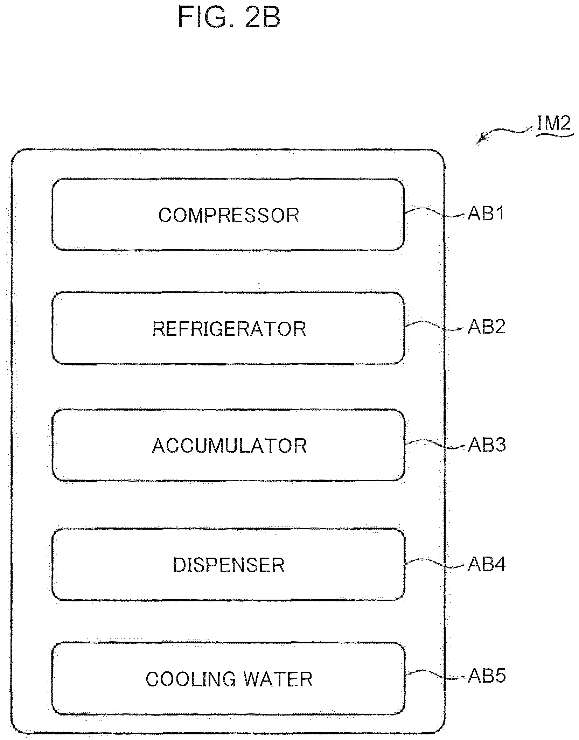

FIGS. 2A and 2B show exemplary images IM1, IM2, respectively, which are displayed on the display portion 120. The images IM1, IM2 are described with reference to FIGS. 1 to 2B.

The image IM1 is displayed on the display portion 120 when an inspector activates the recording apparatus 100. The image IM1 includes button images BT1, BT2. The button image BT1 is pressed when the inspector conducts a daily inspection. The button image BT2 is pressed when the inspector conducts a monthly inspection. The monthly inspection and the daily inspection are different from each other in an inspection region and an inspection item. When the inspector presses the button image BT1 for the daily inspection, only information which is necessary for the daily inspection is displayed on the display portion 120. Information for the monthly inspection which is unnecessary for the daily inspection is not displayed, so that the inspector may smoothly input an inspection result of the daily inspection into the recording apparatus 100. On the other hand, when the inspector presses the button image BT2, only information which is necessary for the monthly inspection is displayed on the display portion 120. Information for the daily inspection which is unnecessary for the monthly inspection is not displayed, so that the inspector may smoothly input an inspection result of the monthly inspection into the recording apparatus 100.

When the inspector presses the button image BT1 in the image IM1, the input portion 130 generates an input signal indicating a pressed portion in the image IM1. The operation controller 140, which has requested the image generator 110 to generate the image signal representing the image IM1, may determine it on the basis of the pressed portion indicated by the image signal that the inspector is about to conduct the daily inspection. The operation controller 140 then reads out image data representing the image IM2 from the storage 150, and generates an image generation request which requests generation of an image signal representing the image IM2. The image generation request is output from the operation controller 140 to the image generator 110. The image generator 110 generates the image signal representing the image IM2 in response to the image generation request. The image signal is output from the image generator 110 to the display portion 120. The display portion 120 displays the image IM2 in response to the image signal. As a result, an image on the display portion 120 is changed from the image IM1 to the image IM2.

The image IM2 is used as a region selection image which divides the hydrogen station (not shown) into predetermined inspection regions and allows the inspector to select one of the inspection regions. The image IM2 includes button images AB1 to AB5. The inspector may press the button image AB1 to select a region in which a compressor of the hydrogen station is placed as an inspection target region. The inspector may press the button image AB2 to select a region in which a refrigerator of the hydrogen station is placed as the inspection target region. The inspector may press the button image AB3 to select a region in which an accumulator of the hydrogen station is placed as the inspection target region. The inspector may press the button image AB4 to select a region in which a dispenser of the hydrogen station is placed as the inspection target region. Unlike the button images AB1 to AB4, the button image AB5 is used not for designation of an inspection region but for designation of an inspection target object. The inspector may press the button image AB5 to designate cooling water as the inspection target object.

When the inspector presses the button image AB1 in the image IM2, the input portion 130 generates an input signal indicating a pressed portion in the image IM2. The operation controller 140, which has requested the image generator 110 to generate the image signal representing the image IM2, may determine it on the basis of the pressed portion indicated by the input signal that the inspector selects the region in which the compressor is placed as the inspection target region. The operation controller 140 then generates an image generation request which requests generation of an input image for the compressor as an input image which receives input of an inspection result. The image generation request is output from the operation controller 140 to the image generator 110. The image generator 110 generates an image signal representing the input image for the compressor in response to the image generation request. The image signal is output from the image generator 110 to the display portion 120. The display portion 120 displays the input image for the compressor in response to the image signal.

When the button image AB2 displayed in a position different from the button image AB1 in the image IM2 is pressed, the input portion 130 generates an input signal indicating a pressed portion in the image IM2. The operation controller 140, which has requested the image generator 110 to generate the image signal representing the image IM2, may determine it on the basis of the pressed portion indicated by the input signal that the inspector selects the region in which the refrigerator is placed as the inspection target region. The operation controller 140 then generates an image generation request which requests generation of an input image for the refrigerator as an input image which receives input of an inspection result. The image generation request is output from the operation controller 140 to the image generator 110. The image generator 110 generates an image signal representing the input image for the refrigerator in response to the image generation request. The image signal is output from the image generator 110 to the display portion 120. The display portion 120 displays the input image for the refrigerator in response to the image signal.

When the button image AB3 displayed in a position different from the button images AB1, AB2 in the image IM2 is pressed, the input portion 130 generates an input signal indicating a pressed portion in the image IM2. The operation controller 140, which has requested the image generator 110 to generate the image signal representing the image IM2, may determine it on the basis of the pressed portion indicated by the input signal that the inspector selects the region in which the accumulator is placed as the inspection target region. The operation controller 140 then generates an image generation request which requests generation of an input image for the accumulator as an input image which receives input of an inspection result. The image generation request is output from the operation controller 140 to the image generator 110. The image generator 110 generates an image signal representing the input image for the accumulator in response to the image generation request. The image signal is output from the image generator 110 to the display portion 120. The display portion 120 displays the input image for the accumulator in response to the image signal.

When the button image AB4 displayed in a position different from the button images AB1, AB2, AB3 in the image IM2 is pressed, the input portion 130 generates an input signal indicating a pressed portion in the image IM2. The operation controller 140, which has requested the image generator 110 to generate the image signal representing the image IM2, may determine it on the basis of the pressed portion indicated by the input signal that the inspector selects the region in which the dispenser is placed as the inspection target region. The operation controller 140 then generates an image generation request which requests generation of an input image for the dispenser as an input image which receives input of an inspection result. The image generation request is output from the operation controller 140 to the image generator 110. The image generator 110 generates an image signal representing the input image for the dispenser in response to the image generation request. The image signal is output from the image generator 110 to the display portion 120. The display portion 120 displays the input image for the dispenser in response to the image signal.

When the button image AB5 displayed in a position different from the button images AB1 to AB4 in the image IM2 is pressed, the input portion 130 generates an input signal indicating a pressed portion in the image IM2. The operation controller 140, which has requested the image generator 110 to generate the image signal representing the image IM2, may determine it on the basis of the pressed portion indicated by the input signal that the inspector selects cooling water as the inspection target object. The operation controller 140 then generates an image generation request which requests generation of an input image for the cooling water as the input image which receives input of an inspection result. The image generation request is output from the operation controller 140 to the image generator 110. The image generator 110 generates an image signal representing the input image for the cooling water in response to the image generation request. The image signal is output from the image generator 110 to the display portion 120. The display portion 120 displays the input image for the cooling water in response to the image signal.

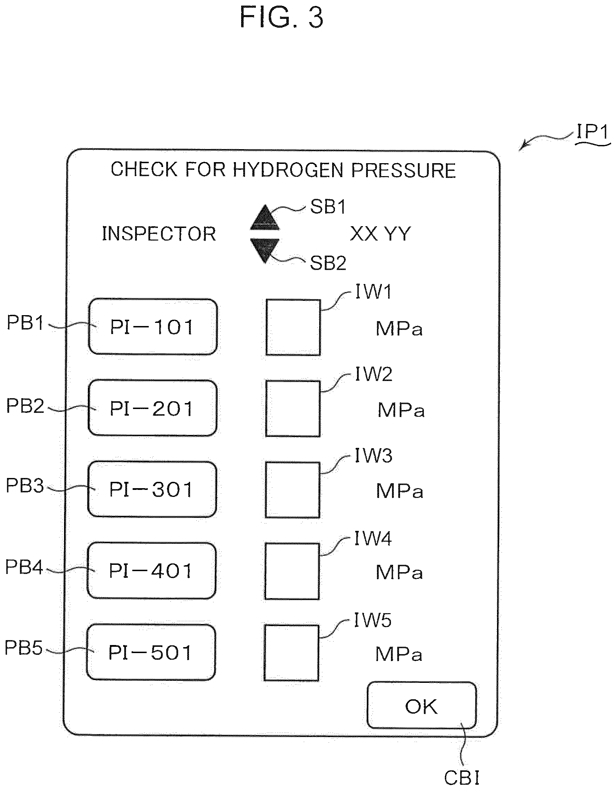

FIG. 3 shows an exemplary input image IP1 for the compressor. The input image IP1 is described with reference to FIGS. 1, 2B and 3.

When the inspector presses the button image AB1 described above with reference to FIG. 2B, the display portion 120 displays the input image IP1. The inspector may input a result of an inspection performed on the compressor into the input image IP1.

The input image IP1 is used for inputting an inspection result about a pressure of hydrogen. With regard to the present embodiment, the input image IP1 is one example of the first input image. The pressure of hydrogen is one example of the first inspection item.

The input image IP1 includes two selection button images SB1, SB2 for selecting names of inspectors. The names of the inspectors are stored in the storage 150 in advance. When an inspector presses one of the selection button images SB1, SB2 in order to select a name of the inspector, the input portion 130 generates an input signal indicating a pressed portion in the input image IP1. The operation controller 140, which has requested the image generator 110 to generate the image signal representing the input image IP1, may determine it on the basis of the pressed portion indicated by the input signal that the inspector is about to select the inspector. The operation controller 140 reads out names of inspectors from the storage 150, and generates an image generation request which requests generation of an image signal for sequentially displaying the names of the inspectors in a region at the right of the selection button images SB1, SB2 while the inspector presses one of the selection button images SB1, SB2. The image generation request is output from the operation controller 140 to the image generator 110. The image generator 110 generates an image signal for sequentially displaying the names of the inspectors in response to the image generation request. The image signal is output from the image generator 110 to the display portion 120. The display portion 120 sequentially displays the names of the inspectors in the region at the right of the selection button images SB1, SB2 in response to the image signal.

The input image IP1, which includes the selection button images SB1, SB2, further includes position button images PB1 to PB5 which respectively represent predetermined inspection points in order to conduct an inspection for a pressure of hydrogen existing around the compressor. An identifier of a meter (a pressure gage) to be used for measuring a pressure of hydrogen is displayed on each of the position button images PB1 to PB5. However, the inspector may be unable to understand which of meters in the hydrogen station is a input target only by seeing the identifier on each of the position button images PB1 to PB5. In this case, the inspector presses one of the position button images PB1 to PB5 (a position button image in correspondence to a meter which the inspector desires to check), so that the inspector may call up an image which allows the inspector to check the meter of the input target. For example, when the inspector presses the position button image PB1 with an identifier "PI-101", the display portion 120 displays a circuit configuration image including a meter in correspondence to the identifier "PI-101" and a photographic image of a part of the hydrogen station, the photographic image showing the meter in correspondence to the identifier "PI-101" and a structure around the meter. The inspector may check where the meter corresponding to the identifier "PI-101" is placed in the hydrogen station with reference to the circuit configuration image and the photographic image. Accordingly, there is a low risk of erroneous input of an inspection result. With regard to the present embodiment, the position button images PB1 to PB5 are examples of the icons.

The input image IP1 further includes input windows IW1 to IW5 in correspondence to the position button images PB1 to PB5, respectively. The inspector may input hydrogen pressures indicated by meters into the input windows IW1 to IW5 in the input image IP1. The input window IW1 is displayed at the right of the position button image PB1. The input window IW2 is displayed at the right of the position button image PB2. The input window IW3 is displayed at the right of the position button image PB3. The input window IW4 is displayed at the right of the position button image PB4. The input window IW5 is displayed at the right of the position button image PB5. The input windows IW1 to IW5 are horizontally aligned with the position button images PB1 to PB5, respectively, so that the inspector may intuitively associate the input windows IW1 to IW5 with the position button images PB1 to PB5, respectively.

When the inspector inputs a pressure of hydrogen into the input window IW1 in the input image IP1, the operation controller 140, which has requested the image generator 110 to generate the image signal representing the input image IP1, may determine that the meter corresponding to the identifier "PI-101" indicates a pressure having a value input into the input window IW1. When the inspector inputs a pressure of hydrogen into the input window IW2 in the input image IP1, the operation controller 140, which has requested the image generator 110 to generate the image signal representing the input image IP1, may determine that a meter corresponding to the identifier "PI-201" indicates a pressure having a value input into the input window IW2. When the inspector inputs a pressure of hydrogen into the input window IW3 in the input image IP1, the operation controller 140, which has requested the image generator 110 to generate the image signal representing the input image IP1, may determine that a meter corresponding to the identifier "PI-301" indicates a pressure having a value input into the input window IW3. When the inspector inputs a pressure of hydrogen into the input window IW4 in the input image IP1, the operation controller 140, which has requested the image generator 110 to generate the image signal representing the input image IP1, may determine that a meter corresponding to the identifier "PI-401" indicates a pressure having a value input into the input window IW4. When the inspector inputs a pressure of hydrogen into the input window IW5 in the input image IP1, the operation controller 140, which has requested the image generator 110 to generate the image signal representing the input image IP1, may determine that a meter corresponding to the identifier "PI-501" indicates a pressure having a value input into the input window IW5. The operation controller 140 temporarily holds numerical values which are input into the input windows IW1 to IW5.

The input image IP1 includes a completion button image CBI, in addition to the input windows IW1 to IW5 and the selection button images SB1, SB2. The completion button image CBI is used as a completion reception image configured to receive a notification from the inspector, the notification representing completion of input into all of the input windows IW1 to IW5. The inspector completing input into all of the input windows IW1 to IW5 presses the completion button image CBI to make a request for a next input image.

When the inspector presses the completion button image CBI, the input portion 130 generates an input signal indicating a pressed portion in the input image IP1. The operation controller 140, which has requested the image generator 110 to generate the image signal representing the input image IP1, may determine it on the basis of the pressed portion indicated by the input signal that the inspector makes a request for a next input image. The operation controller 140 then verifies whether or not numerical values are input into all of the input windows IW1 to IW5. If the numerical values are input into all of the input windows IW1 to IW5, the operation controller 140 writes those numerical values into the storage 150 as data indicating pressures of hydrogen. As a result, an inspection result about the pressures of hydrogen is held in the storage 150. On the other hand, if input into all of the input windows IW1 to IW5 is uncompleted, the operation controller 140 generates an image generation request which requests generation of an image signal indicating an error message. The image generation request is output from the operation controller 140 to the image generator 110. The image generator 110 generates an image signal for displaying the error message in response to the image generation request. The image signal is output from the image generator 110 to the display portion 120. The display portion 120 displays the error message in response to the image signal. The inspector seeing the error message displayed on the display portion 120 may understand that input of the inspection result about the pressures of hydrogen is uncompleted. Accordingly, there is a low risk of omitting an inspection.

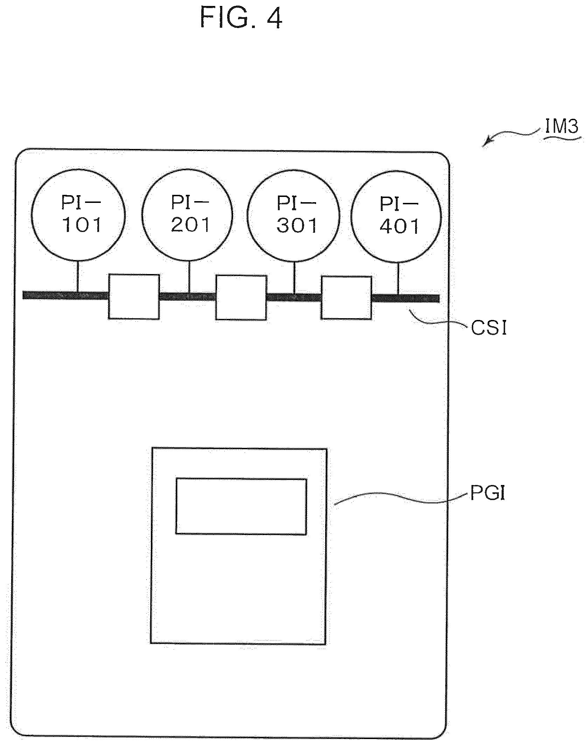

FIG. 4 shows an image IM3 which is displayed on the display portion 120 when an inspector presses the position button image PB1. The image IM3 is described with reference to FIGS. 1,3 and 4,.

When an inspector presses the position button image PB1 shown in FIG. 3, the input portion 130 generates an input signal indicating a pressed portion in the input image IP1. The operation controller 140, which has requested the image generator 110 to generate the image signal representing the input image IP1, determines it on the basis of the pressed portion indicated by the image signal that the inspector desires to check the meter corresponding to the identifier "PI-101". The operation controller 140 then generates an image generation request which requests generation of an image signal representing the image IM3. The image generation request is output from the operation controller 140 to the image generator 110. The image generator 110 generates an image signal for displaying the image IM3 in response to the image generation request. The image signal is output from the image generator 110 to the display portion 120. The display portion 120 displays the image IM3 in response to the image signal. The inspector seeing the image IM3 displayed on the display portion 120 may check where is the meter corresponding to the identifier "PI-101", and which of meters corresponds to the identifier "PI-101".

The image IM3 includes a circuit configuration image CSI showing a circuit configuration diagram of a part of the hydrogen station (not shown). Circuit data indicating the circuit configuration diagram of the whole hydrogen station is stored in the storage 150 in advance. Data of a part which includes the meter corresponding to the identifier "PI-101" is extracted from the circuit data by the operation controller 140 which has determined that the inspector desires to check the meter corresponding to the identifier "PI-101". The operation controller 140 reads out the extracted data from the storage 150, and outputs the data to the image generator 110 as the image generation request. As a result, the image generator 110 generates an image signal representing the circuit configuration diagram of the part which includes the meter corresponding to the identifier "PI-101". The image signal is output from the image generator 110 to the display portion 120. As a result, the circuit configuration diagram of the part which includes the meter corresponding to the identifier "PI-101" is displayed on the display portion 120. The circuit configuration diagram displayed on the display portion 120 is not a circuit configuration diagram of the whole hydrogen station but a part of a circuit configuration diagram which is necessary for checking a designated meter. Therefore, the displayed image does not become too fine for the inspector. Accordingly, the inspector may easily find out a meter designated by the inspector (i.e. the meter corresponding to the identifier "PI-101") in the circuit configuration diagram on the display portion 120. Frames displayed between images of meters respectively corresponding to the identifiers "PI-101", "PI-201", "PI-301" and "PI-401" which are included in the circuit configuration image CSI shown in FIG. 4 as the circuit configuration diagram on the display portion 120 represent various pieces of equipment (a valve and a cylinder of a compressor) incorporated into the hydrogen station. The inspector may use those pieces of equipment as clues to associate meters in the hydrogen station with meters in the circuit configuration image CSI. Accordingly, the inspector may also efficiently check meters. The inspector refers to a difference in pressure between adjacent meters, to check whether or not a piece of equipment placed between those meters appropriately operates.

The image IM3, which includes images of frames representing pieces of equipment between meters and images of the identifiers "PI-I01", "PI-201", "PI-301", "PI-401" of meters, further includes a photographic image PGI which is extracted from photograph data indicating a photographic image of each of all or a part of predetermined inspection points. The photograph data indicating the photographic image of each of all or a part of the predetermined inspection points is stored in the storage 150 in advance. A piece of photograph data of the meter corresponding to the identifier "PI-101" is read out from the storage 150 by the operation controller 140 which has determined that the inspector desires to check the meter corresponding to the identifier "PI-101". The read piece of photograph data is output from the operation controller 140 to the image generator 110 as an image generation request. The image generator 110 generates an image signal from the piece of photograph data. The image signal is output from the image generator 110 to the display portion 120. As a result, the photographic image PGI of the meter corresponding to the identifier "PI-101" is displayed on the display portion 120. Not only a meter but also a structure around the meter is shown in the photographic image PGI. Accordingly, if a meter which is recognized as an inspection target by the inspector is different from the meter in the photographic image PGI, the inspector may instantaneously understand such mismatch between the meters. Therefore, there is a low risk of human error in an inspection.

As shown in FIG. 3, the identifiers "PI-101", "PI-201", "PI-301", "PI-401", "PI-501" are sequentially arranged in the vertical direction. As shown in FIG. 4, the identifiers "PI-101", "PI-201", "PI-301", "PI-401" are sequentially arranged in the horizontal direction. The display of the identifiers in FIGS. 3 and 4 are different in arrangement direction from each other but are identical in arrangement order to each other. Accordingly, the inspector may input inspection results into the input windows IW1 to IW5 respectively corresponding to the position button images PB1 to PB5 in conformity to the arrangement order in the circuit configuration diagram. As a result, there is a low risk of omitting an inspection.

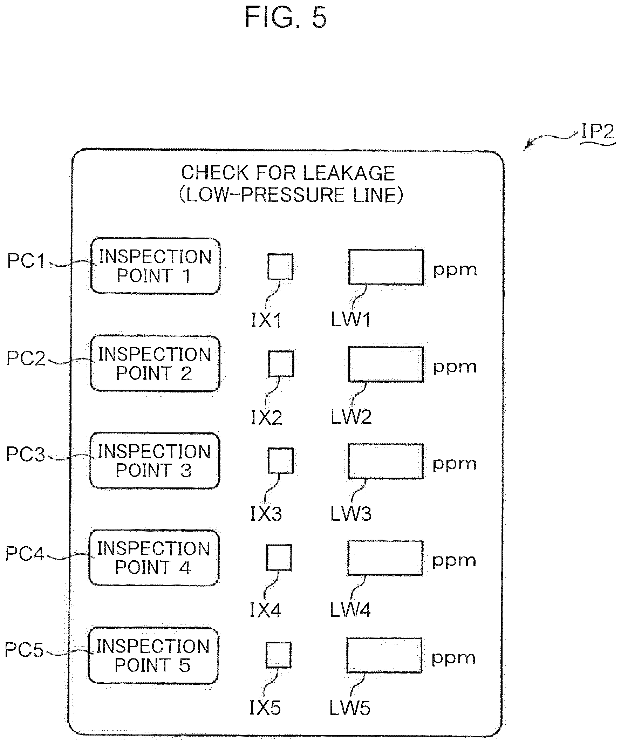

FIG. 5 shows an input image IP2 which is displayed on the display portion 120 when the inspector presses the completion button image CBI (c.f. FIG. 3). The input image IP2 is described with reference to FIGS. 1, 3 and 5.

When the inspector presses the completion button image CBI shown in FIG. 3, the input portion 130 generates an input signal indicating a pressed portion in the input image IP1. The operation controller 140, which has requested the image generator 110 to generate the image signal representing the input image IP1 determines it on the basis of the pressed portion indicated by the input signal that the inspector is about to conduct an inspection for an inspection item which is different in contents from the inspection for the hydrogen pressure that has been conducted with the input image IP1. The operation controller 140 generates an image generation request which requests generation of an image signal for displaying the input image IP2 shown in FIG. 5. The image generation request is output from the operation controller 140 to the image generator 110. The image generator 110 generates an image signal for displaying the input image IP2 in response to the image generation request. The image signal is output from the image generator 110 to the display portion 120. The display portion 120 displays the input image IP2 in response to the image signal. The input image IP2 is used for inputting a result of an inspection for leakage of hydrogen in a low-pressure line of the hydrogen station (not shown). With regard to the present embodiment, the input image IP2 is one example of the second input image, and leakage of hydrogen is one example of the second inspection item.

The input image IP2 includes position button images PC1 to PC5, input windows IX1 to IX5 and leakage-level windows LW1 to LW5. An "inspection point 1" to an "inspection point 5" are shown in the position button images PC1 to PC5. When the inspector presses one of the position button images PC1 to PC5, an image including a circuit configuration image and a photographic image corresponding to the pressed inspection point is displayed on the display portion 120. With regard to the present embodiment, the position button images C1 to PC5 are examples of the icons.

At the "inspection point 1" to the "inspection point 5" shown in the position button images PC1 to PC5, the inspector conducts an inspection for leakage of hydrogen with a predetermined inspecting tool. After the inspector finishes the inspection for leakage of hydrogen at each of the "inspection point 1" to the "inspection point 5", the inspector presses the input windows IX1 to IX5. When the inspector presses the input windows IX1 to IX5, the input portion 130 generates an input signal indicating the pressed portion in the input image IP2. The operation controller 140, which has requested the image generator 110 to generate the image signal representing the input image IP2, determines it on the basis of the pressed portion indicated by the image signal that the inspector is about to put check marks in the input windows IX1 to IX5. The operation controller 140 generates an image generation request which requests generation of an image signal for displaying the check marks in the input windows IX1 to IX5. The image generation request is output from the operation controller 140 to the image generator 110. The image generator 110 generates the image signal for displaying the check marks in the input windows IX1 to IX5 in response to the image generation request. The image signal is output from the image generator 110 to the display portion 120. The display portion 120 displays the check marks in the input windows IX1 to IX5 in response to the image signal.

The input windows IX1 to IX5 are displayed at the right of the position button images PC1 to PC5, respectively. When the inspector finishing an inspection for leakage of hydrogen at the "inspection point 1" with a predetermined inspecting tool presses the input window IX1, a check mark is displayed in the input window IX1. When the inspector finishing an inspection for leakage of hydrogen at the "inspection point 2" different from the "inspection point 1" with a predetermined inspecting tool presses the input window IX2, a check mark is displayed in the input window IX2. When the inspector finishing an inspection for leakage of hydrogen at the "inspection point 3" different from the "inspection point 1" and the "inspection point 2" with a predetermined inspecting tool presses the input window IX3, a check mark is displayed in the input window IX3. When the inspector finishing an inspection for leakage of hydrogen at the "inspection point 4" different from the "inspection point 1" to the "inspection point 3" with a predetermined inspecting tool presses the input window IX4, a check mark is displayed in the input window IX4. When the inspector finishing an inspection for leakage of hydrogen at the "inspection point 5" different from the "inspection point 1" to the "inspection point 4" with a predetermined inspecting tool presses the input window IX5, a check mark is displayed in the input window IX5.

If leakage of hydrogen is observed at any of the "inspection point 1" to the "inspection point 5", the inspector enters a leakage level indicated by an inspecting tool in a leakage-level window corresponding to an inspection point where leakage of hydrogen occurs. In short, if leakage of hydrogen is observed at the "inspection point 1", the inspector inputs a leakage level into the leakage-level window LW1 at the right of the input window IX1. If leakage of hydrogen is observed at the "inspection point 2", the inspector inputs a leakage level into the leakage-level window LW2 at the right of the input window IX2. If leakage of hydrogen is observed at the "inspection point 3", the inspector inputs a leakage level into the leakage-level window LW3 at the right of the input window IX3. If leakage of hydrogen is observed at the "inspection point 4", the inspector inputs a leakage level into the leakage-level window LW4 at the right of the input window IX4. If leakage of hydrogen is observed at the "inspection point 5", the inspector inputs a leakage level into the leakage-level window LW5 at the right of the input window IX5.

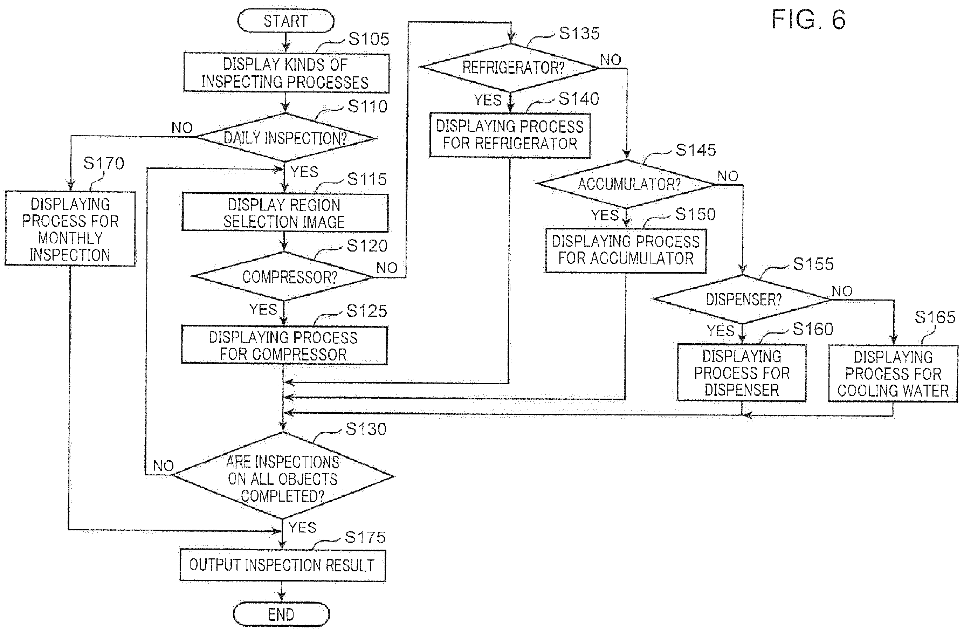

FIG. 6 is a schematic flow chart showing exemplary operations of the recording apparatus 100. The operations of the recording apparatus 100 are described with reference to FIGS. 1 to 6.

### (Step S105)

The recording apparatus 100 displays an image showing kinds of inspecting processes (c.f. FIG. 2A) on the display portion 120. Then, step S110 is performed.

### (Step S110)

When the inspector presses the button image BT1 (c.f. FIG. 2A) representing a daily inspection in the image showing kinds of inspecting processes, step S115 is performed. When the inspector presses the button image BT2 (c.f. FIG. 2A) representing a monthly inspection, step S170 is performed.

### (Step S115)

When the inspector presses the button image BT1, the recording apparatus 100 displays the region selection image (c.f. FIG. 2B) on the display portion 120. Then, step S120 is performed.

### (Step S120)

When the inspector presses the button image AB1 (c.f. FIG. 2B) representing the compressor in the region selection image, step S125 is performed. Otherwise, step S135 is performed.

### (Step S125)

When the inspector presses the button image AB1, the recording apparatus 100 performs the displaying process for the compressor (c.f. FIGS. 3 to 5). The display portion 120 of the recording apparatus 100 may display an input image for inputting an inspection result about a temperature of hydrogen in the step S125, in addition to displaying the input image for inputting inspection results about a pressure of hydrogen and leakage of hydrogen as shown in FIGS. 3 and 5. After the displaying process for the compressor is finished, a step S130 is performed.

### (Step S130)

The operation controller 140 of the recording apparatus 100, which finishes the displaying process, verifies data of inspection results stored in the storage 150 and determines whether or not inspections on all of targets (i.e. the compressor, the refrigerator, the accumulator, the dispenser and the cooling water) are completed. If inspections on all of objects are completed, step S175 is performed. Otherwise, the step S115 is performed

### (Step S135)

When the inspector presses the button image AB2 (c.f. FIG. 2B) representing the refrigerator, step S140 is performed. Otherwise, step S145 is performed.

### (Step S140)

When the inspector presses the button image AB2 representing the refrigerator, the recording apparatus 100 performs a displaying process for the refrigerator. For example, the display portion 120 of the recording apparatus 100 may display an input image for inputting occurrence or non-occurrence of leakage of brine in the step S140. After the displaying process for the refrigerator is finished, the step S130 is performed.

### (Step S145)

When the inspector presses the button image AB3 (c.f. FIG. 2B) representing the accumulator, step S150 is performed. Otherwise, step S155 is performed.

### (Step S150)

When the inspector presses the button image AB3 representing the accumulator, the recording apparatus 100 performs a displaying process for the accumulator. For example, the display portion 120 of the recording apparatus 100 may display an input image for inputting a pressure of hydrogen, occurrence or non-occurrence of leakage of hydrogen, or a temperature of hydrogen in the step S150. After the displaying process for the accumulator is finished, the step S130 is performed.

### (Step S155)

When the inspector presses the button image AB4 (c.f. FIG. 2B) representing the dispenser, step S160 is performed. When the inspector presses the button image AB5 (c.f. FIG. 2B) representing the cooling water, step S165 is performed.

### (Step S160)

When the inspector presses the button image AB4 representing a dispenser, the recording apparatus 100 performs a displaying process for the dispenser. For example, the display portion 120 of the recording apparatus 100 may display an input image for inputting a pressure of hydrogen, occurrence or non-occurrence of leakage of hydrogen, or a temperature of hydrogen in the step S160. After the displaying process for the dispenser is finished, step S130 is performed.

### (Step S165)

The recording apparatus 100 performs a displaying process for the cooling water. For example, the display portion 120 of the recording apparatus 100 may display an input image for inputting a degree of contamination of the cooling water, a remaining amount of a chemical solution injected into the cooling water, a temperature of the cooling water, or occurrence or non-occurrence of leakage of the cooling water in the step S165. After the displaying process for the cooling water is finished, step S130 is performed.

### (Step S170)

When the inspector presses the button image BT2 representing the monthly inspection, the recording apparatus 100 performs a displaying process for the monthly inspection. The displaying process for the monthly inspection may be identical to steps S115 to S165. The description about steps S115 to S165 may be applied to step S170. After the displaying process for the monthly inspection is finished, step S175 is performed.

### (Step S175)

The operation controller 140 of the recording apparatus 100 generates an output request. The output request is output from the operation controller 140 to the output portion 160. The output portion 160 reads out an inspection result from the storage 150 and generates a wireless signal indicating the inspection result. The wireless signal is output from the output portion 160 to the external apparatus 200. If the external apparatus 200 is a printer, the inspection result indicated by the wireless signal is printed out. If the external apparatus 200 is a computer server, the inspection result indicated by the wireless signal is stored. The inspection result stored in the external apparatus 200 may be subsequently analyzed by the inspector. With regard to the present embodiment, an input image which is subjected to an inputting process immediately before step S175 is one example of the first input image.

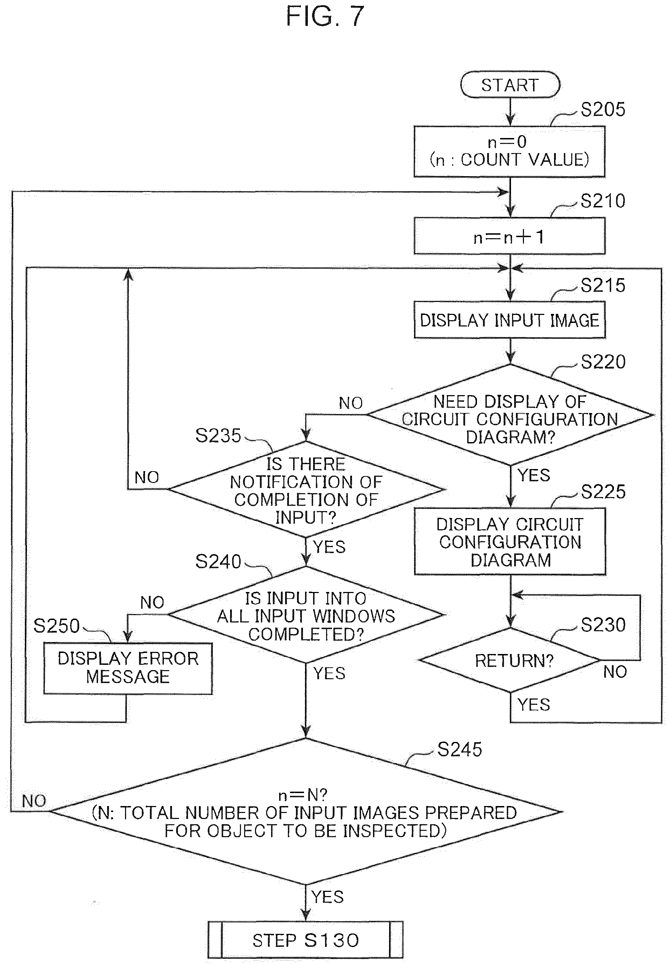

FIG. 7 is a schematic flow chart showing exemplary operations of the operation controller 140 in step S125, step S140, step S150, step S160 or step S165. The operations of the operation controller 140 are described with reference to FIGS. 1, 3 to 7.

### (Step S205)

The operation controller 140 sets a count value "n" to "zero", the count value "n" being used for a displaying process for an inspection target (i.e. the compressor, the refrigerator, the accumulator, the dispenser, or the cooling water). Then, step S210 is performed.

### (Step S210)

The operation controller 140 increments the count value "n" by "one". Then, step S215 is performed.

### (Step S215)

The operation controller 140 reads out image data from the storage 150 and generates an image generation request, the image data being necessary for displaying an input image. The image generation request is output from the operation controller 140 to the image generator 110. The image generator 110 generates an image signal in response to the image generation request. The image signal is output from the image generator 110 to the display portion 120. The display portion 120 displays the input image in response to the image signal (c.f. FIGS. 3 and 5). Like the input image for the compressor (c.f. FIGS. 3 and 5), the input image for inputting an inspection result for each of the refrigerator, the accumulator, the dispenser and the cooling water may include icons respectively representing inspection points, and input windows which are displayed respectively in correspondence to the inspection points. When the input image is displayed, step S220 is performed.

### (Step S220)

The operation controller 140 determines whether or not the inspector makes a request for display of the circuit configuration diagram. For example, if the inspector presses any of the position button images PB1 to PB5 (c.f. FIG. 3) or any of the position button images PC1 to PC5 (c.f. FIG. 5), the operation controller 140 may determine it on the basis of an input signal output from the input portion 130 that the inspector makes a request for display of the circuit configuration diagram. When the inspector makes a request for display of the circuit configuration diagram, step S225 is performed. Otherwise, step S235 is performed.

### (Step S225)

From the storage 150, the operation controller 140 reads out data of a configuration diagram of a circuit provided around an inspection point which the inspector desires to inspect, and photograph data of a part of a hydrogen station, the photograph data showing the inspection point which the inspector desires to inspect and a structure around the inspection point, and then generates an image generation request. The image generation request is output from the operation controller 140 to the image generator 110. The image generator 110 generates an image signal in response to the image generation request. The image signal is output from the image generator 110 to the display portion 120. The display portion 120 displays the circuit configuration diagram or photographic image in response to the image signal (c.f. FIG. 4). Then, step S230 is performed.

### (Step S230)

The operation controller 140 waits for the inspector to make a request for a return to an input image. The inspector checking an inspection point with reference to the circuit configuration diagram or photographic image may make the request for the return to the input image by performing a predetermined operation (e.g. a press of a return button image (not shown)) on the input portion 130. The operation controller 140 may determine whether or not the inspector makes the request for the return to the input image on the basis of an input signal resulted from the operation performed on the input portion 130. When the inspector makes the request for the return to the input image, step S215 is performed.

### (Step S235)

While the input image is displayed on the display portion 120, the inspector may operate the input portion 130 to input an inspection result. When input of the inspection result is completed (e.g. when input into the input windows IW1 to IW5 (c.f. FIG. 3) or the input windows IX1 to IX5 (c.f. FIG. 5) is completed), the inspector presses a completion reception image (e.g. the completion button image CBI in FIG. 3) for giving a notification of completion of input. As a result, an input signal indicating that the completion reception image is pressed is generated by the input portion 130. The input signal is output from the input portion 130 to the operation controller 140. The operation controller 140 may refer to the input signal to determine whether or not the completion reception image is pressed. If the inspector presses the completion reception image, step S240 is performed. Otherwise, the step S215 is performed.

### (Step S240)

The operation controller 140 verifies whether or not the inspection result is input into each of all input windows in the input image. If the inspection result is input into each of all input windows in the input image, step S245 is performed. Otherwise, step S250 is performed.

### (Step S245)

The operation controller 140 determines whether or not the count value "n" is equal to the total number "N" of input images which are prepared for an inspection target (i.e. the compressor, the refrigerator, the accumulator, the dispenser or the cooling water). If the count value "n" is equal to the total number "N", step S130 is performed. Otherwise, step S210 is performed.

### (Step S250)

The operation controller 140 requests the image generator 110 to display an error message. The image generator 110 generates an image signal indicating the error message in response to a request for display of the error message. The image signal is output from the image generator 110 to the display portion 120. The display portion 120 displays the error message in response to the image signal. The inspector seeing the error message may notice omission of an inspection and/or omission of input. Accordingly, there is a low risk of human error in an inspection. After the request for display of the error message is made, step S215 is performed.

The process loop including step S215, step S220, step S235 and step S245 is repeated until the count value "n" becomes equal to the total number "N". Input images displayed on the display portion 120 during this period are different in contents from one another (c.f. FIGS. 3 and 5). Accordingly, the inspector may sequentially display input images which are different in contents on the display portion 120, and input inspection results. As a result, there is a low risk of omitting an inspection. In the process loop including step S215, step S220,step S235 and step S245, input images for inputting results of inspections are displayed not only for a pressure of hydrogen and leakage of hydrogen shown in FIGS. 3 and 5 but also other various inspection items such as a temperature of hydrogen or a flow rate of hydrogen.

With regard to the present embodiment, the compressor, the refrigerator, the accumulator, the dispenser and the cooling water are shown as inspection targets. However, other devices or other objects may be inspected as inspection targets. For example, the inspection target may be a connecting pipe which connects the compressor, the refrigerator, the accumulator and the dispenser. In this case, a pressure and a temperature of hydrogen flowing through the connecting pipe and leakage of hydrogen from the connecting pipe may be set as inspection items. Nitrogen flowing throughout the hydrogen station may also be inspected as an inspection object. For example, a pressure of nitrogen is set as an inspection item.

The aforementioned embodiment mainly includes a recording apparatus having the following configuration.

A portable recording apparatus according to one aspect of the aforementioned embodiment is used for recording an inspection result for a hydrogen station. The recording apparatus includes: an image generator configured to generate an input image, which is configured to receive an input of the inspection result, and a circuit configuration image which represents a part of a circuit configuration in the hydrogen station; a display portion configured to display the input image and the circuit configuration image; and a storage in which the inspection result is stored, the inspection result having been input by using the input image which is displayed on the display portion. The input image shows icons representing predetermined inspection points in the hydrogen station, respectively, and input windows displayed in correspondence to the inspection points, respectively. When one of the inspection points displayed on the display portion is designated under an operation for one of the icons, the image generator generates the circuit configuration image so that the designated inspection point is displayed on the display portion as the part of the circuit configuration.

According to the aforementioned configuration, the input windows for the input image are displayed in correspondence to predetermined inspection points in the hydrogen station, respectively, so that an inspector may input inspection results which are obtained at the inspection points, respectively, into the corresponding input windows. Inspection results input by using the input image displayed on the display portion are stored in the storage, so that the recording apparatus may hold the inspection results which have been input into the input windows. The inspection results held in the recording apparatus may be used for making a daily or monthly report. Accordingly, there is a decrease in labor of the inspector for making the daily or monthly report.

When the inspector uses one of the icons to designate one of the inspection points which are displayed on the display portion, the image generator generates the circuit configuration image so that the designated inspection point is displayed on the display portion as a part of the circuit configuration. Therefore, the inspector may refer to the circuit configuration image displayed on the display portion so that the inspector makes sure which portion the inspector inspects, and then conduct a predetermined inspection. The inspector may compare an actual inspection point in the hydrogen station with an inspection point in the circuit configuration, so that there is a low risk of human error in an inspection such as omission of an inspection or erroneous entry.

With regard to the aforementioned configuration, when one of the inspection points displayed on the display portion is designated, the image generator may cause the display portion to display a photographic image of a part of the hydrogen station so that the designated inspection point is included in the photographic image.

According to the aforementioned configuration, when one of the inspection points displayed on the display portion is designated, the image generator causes the display portion to display the photographic image of a part of the hydrogen station so that the designated inspection point is included in the photographic image. Therefore, if an inspection point recognized by an inspector is different from an inspection point shown in the photographic image, the inspector may notice a mismatch between those inspection points. Accordingly, there is a low risk of human error in an inspection.

With regard to the aforementioned configuration, the image generator may generate a region selection image configured to allow an inspector to select one of predetermined inspection regions into which the hydrogen station is divided. If the selected inspection region is a compressor of the hydrogen station, the image generator may generates an input image for the compressor as the input image, the input image for the compressor showing the icons, which respectively represent the inspection points set for inspecting the compressor, and the input windows to be displayed respectively in correspondence to the inspection points set for inspecting the compressor. If the selected inspection region is a refrigerator of the hydrogen station, the image generator may generates an input image for the refrigerator as the input image, the input image for the refrigerator showing the icons, which respectively represent the inspection points set for inspecting the refrigerator, and the input windows to be displayed respectively in correspondence to the inspection points set for inspecting the refrigerator. If the selected inspection region is an accumulator of the hydrogen station, the image generator may generate an input image for the accumulator as the input image, the input image for the accumulator showing the icons, which respectively represent the inspection points set for inspecting the accumulator, and the input windows to be displayed respectively in correspondence to the inspection points set for inspecting the accumulator.

There are various inspection points in the hydrogen station. Accordingly, if an input image is generated so that all of inspection points are displayed in one view, it becomes difficult for the inspector to see the input image so that a human error is likely to happen to an inspection. However, the image generator generates a region selection image, which divides the hydrogen station into predetermined inspection regions and allows the inspector to select one of the inspection regions, and an input image for each of selected inspection regions, so that the image generator requests the inspector to input an inspection result. If the selected inspection region is a compressor of the hydrogen station, the image generator generates an input image for the compressor as the input image, the input image for the compressor including icons representing predetermined inspection points for inspecting the compressor, and input windows to be displayed respectively in correspondence to the predetermined inspection points which are set for inspecting the compressor. Therefore, the input image for the compressor does not have to include information about a refrigerator and an accumulator which are unnecessary for an inspection of the compressor. Accordingly, it becomes easy for the inspector conducting the inspection of the compressor to see the input image for the compressor. If the selected inspection region is the refrigerator of the hydrogen station, the image generator generates an input image for the refrigerator as the input image, the input image for the refrigerator including icons representing predetermined inspection points for inspecting the refrigerator, and input windows to be displayed respectively in correspondence to the inspection points which are set for inspecting the refrigerator. Therefore, the input image for the refrigerator does not have to include information about the accumulator and the compressor which are unnecessary for the inspection of the refrigerator. Accordingly, it becomes easy for the inspector conducting the inspection of the refrigerator to see the input image for the refrigerator. If the selected inspection region is an accumulator of the hydrogen station, the image generator generates an input image for the accumulator as the input image, the input image for the accumulator including icons representing inspection points which are set for inspecting the accumulator, and input windows to be displayed respectively in correspondence to the inspection points which are set for inspecting the accumulator. Therefore, the input image for the accumulator does not have to include information about the compressor and the refrigerator which are unnecessary for the inspection of the accumulator. Accordingly, it becomes easy for the inspector conducting the inspection of the accumulator to see the input image for the accumulator.

With regard to the aforementioned configuration, the image generator may be configured to generate a first input image as the input image, the first input image being configured to receive the inspection result about a predetermined first inspection item. The first input image may include the icons, which respectively represent the inspection points set for the first inspection item, the input windows to be displayed respectively in correspondence to the inspection points set for the first inspection item, and a completion reception image configured to receive a notification from an inspector, the notification representing a completion of input into all of the input windows for the first inspection item. The image generator may cause the display portion to display an error message when the completion reception image receives the notification from the inspector before the completion of the input into all of the input windows for the first inspection item.

According to the aforementioned configuration, an inspector may conduct an inspection for the first inspection item at each of the inspection points, and input inspection results about the first inspection item into the input windows, respectively. In addition, the inspector may operate the completion reception image to give the recording apparatus a notification of completion of input into all of the input windows for the first inspection item. The inspector may operate the completion reception image by mistake before completion of input into all of the input windows for the first inspection item. In this case, the image generator causes the display portion to display an error message, so that the inspector may understand that there is an input window into which nothing is input or there is an inspection point which has not been inspected. Accordingly, there is a very low risk of human error in an inspection.

With regard to the aforementioned configuration, the image generator may be configured to generate a second input image as the input image, the second input image being used for inputting the inspection result about a predetermined second inspection item different in contents from the first inspection item. The image generator may cause the display portion to display the second input image when the completion reception image receives the notification from the inspector after the completion of the input into all of the input windows for the first inspection item.

According to the aforementioned configuration, when the completion reception image receives the notification of completion from the inspector after the completion of input into all of the input windows for the first inspection item, the image generator causes the display portion to display the second input image for inputting an inspection result about a predetermined second inspection item which is different in contents from the first inspection item, so that the recording apparatus may facilitate the inspector to sequentially conduct inspections for inspection items which are different in contents from one another. Accordingly, the inspector may cover all inspections for various inspection items. As a result, there is a low risk of human error in an inspection.

With regard to the aforementioned configuration, the recording apparatus may further include an output portion configured to output the inspection result which has been input by using the input image. The output portion may output the inspection result to an external apparatus when the completion reception image receives the notification from the inspector after the completion of the input into all of the input windows for the first inspection item.

According to the aforementioned configuration, when the completion reception image receives a notification of the completion from the inspector after the completion of input into all of the input windows for the first inspection item, the output portion outputs an inspection result, so that the inspection result is not only recorded in the recording apparatus but also transferred to an external apparatus. The inspector may use the external apparatus to analyze the inspection result and/or transfer the inspection result to another recording medium.

With regard to the aforementioned configuration, the inspection points in the input image are displayed in conformity to an arrangement order of the inspection points in the circuit configuration image.

According to the aforementioned configuration, the inspection points in the input image are displayed in conformity to an arrangement order of the inspection points in the circuit configuration image, so that the inspector may easily compare the inspection points in the input image with the inspection points in the circuit configuration. Accordingly, there is a low risk of human error in an inspection such as omission of an inspection or erroneous entry.

The embodiment disclosed herein is illustrative in all aspects, and should be understood as non-limitative. The scope of the present invention is indicated by not the above description, but the claims, and it is intended to include all alterations within the claims and the meaning and range of equivalence.

The aforementioned techniques are suitably applied to a hydrogen station which supplies hydrogen to a tank of a tank-mounting apparatus.

This application is based on Japanese Patent Application No. 2017-146755 filed in Japan Patent Office on July 28, 2017.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

Present application discloses portable recording apparatus to be used for recording inspection result for hydrogen station. Recording apparatus includes image generator configured to generate input image, which is configured to receive input of inspection result, and circuit configuration image which represents part of circuit configuration in hydrogen station; display portion configured to display input image and circuit configuration image; and storage in which inspection result is stored, inspection result having been input by using input image which is displayed on display portion. Input image shows icons representing predetermined inspection points in hydrogen station, respectively, and input windows displayed in correspondence to inspection points, respectively. When one of inspection points displayed on display portion is designated under operation for one of icons, image generator generates circuit configuration image so that designated inspection point is displayed on display portion as part of circuit configuration.

## Claims

1. A portable recording apparatus (100) to be used for recording an inspection result for a hydrogen station, comprising:
an image generator (110) configured to generate an input image, which is configured to receive an input of the inspection result, and a circuit configuration image (CSI) which represents a part of a circuit configuration in the hydrogen station;
a display portion (120) configured to display the input image and the circuit configuration image (CSI); and
a storage (150) in which the inspection result is stored, the inspection result having been input by using the input image which is displayed on the display portion (120),
**characterised in that** the input image shows icons (PB1-PB5, PC1-PC5) representing predetermined inspection points in the hydrogen station, respectively, and input windows (IW1-IW5, IX1-IX5) displayed in correspondence to the inspection points, respectively, and
that when one of the inspection points displayed on the display portion (120) is designated under an operation for one of the icons (PB1-PB5, PC1-PC5), the image generator (110) is configured to generate the circuit configuration image (CSI) so that the designated inspection point is displayed on the display portion (120) as the part of the circuit configuration.

2. The portable recording apparatus (100) according to claim 1,
wherein when one of the inspection points displayed on the display portion (120) is designated, the image generator (110) causes the display portion (120) to display a photographic image (PGI) of a part of the hydrogen station so that the designated inspection point is included in the photographic image (PGI).

3. The portable recording apparatus (100) according to claim 1 or 2,
wherein the image generator (110) is configured to generate a region selection image (IM2) configured to allow an inspector to select one of predetermined inspection regions into which the hydrogen station is divided,
wherein if the selected inspection region is a compressor of the hydrogen station, the image generator (110) is configured to generate an input image for the compressor as the input image, the input image for the compressor showing the icons (PB1-PB5, PC1-PC5), which respectively represent the inspection points set for inspecting the compressor, and the input windows (IW1-IW5, IX1-IX5) to be displayed respectively in correspondence to the inspection points set for inspecting the compressor,
wherein if the selected inspection region is a refrigerator of the hydrogen station, the image generator (110) is configured to generate an input image for the refrigerator as the input image, the input image for the refrigerator showing the icons (PB1-PB5, PC1-PC5), which respectively represent the inspection points set for inspecting the refrigerator, and the input windows (IW1-IW5, IX1-IX5) to be displayed respectively in correspondence to the inspection points set for inspecting the refrigerator, and
wherein if the selected inspection region is an accumulator of the hydrogen station, the image generator (110) is configured to generate an input image for the accumulator as the input image, the input image for the accumulator showing the icons (PB1-PB5, PC1-PC5), which respectively represent the inspection points set for inspecting the accumulator, and the input windows (IW1-IW5, IX1-IX5) to be displayed respectively in correspondence to the inspection points set for inspecting the accumulator.

4. The portable recording apparatus (100) according to claim 1 or 2,
wherein the image generator (110) is configured to generate a first input image (IP1) as the input image, the first input image (IP1) being configured to receive the inspection result about a predetermined first inspection item,
wherein the first input image (IP1) includes the icons (PB1-PB5, PC1-PC5), which respectively represent the inspection points set for the first inspection item, the input windows (IW1-IW5, IX1-IX5) to be displayed respectively in correspondence to the inspection points set for the first inspection item, and a completion reception image (CBI) configured to receive a notification from an inspector, the notification representing a completion of input into all of the input windows (IW1-IW5, IX1-IX5) for the first inspection item, and
wherein the image generator (110) causes the display portion (120) to display an error message when the completion reception image (CBI) receives the notification from the inspector before the completion of the input into all of the input windows (IW1-IW5, IX1-IX5) for the first inspection item.

5. The portable recording apparatus (100) according to claim 4,
wherein the image generator (110) is configured to generate a second input image (IP2) as the input image, the second input image (IP2) being used for inputting the inspection result about a predetermined second inspection item different in contents from the first inspection item, and
wherein the image generator (110) causes the display portion (120) to display the second input image (IP2) when the completion reception image (CBI) receives the notification from the inspector after the completion of the input into all of the input windows (IW1-IW5, IX1-IX5) for the first inspection item.

6. The portable recording apparatus (100) according to claim 4, further comprising:
an output portion (160) configured to output the inspection result which has been input by using the input image,
wherein the output portion (160) is configured to output the inspection result to an external apparatus when the completion reception image (CBI) receives the notification from the inspector after the completion of the input into all of the input windows (IW1-IW5, IX1-IX5) for the first inspection item.

7. The portable recording apparatus (100) according to any one of claims 1 to 6,
wherein the inspection points in the input image are displayed in conformity to an arrangement order of the inspection points in the circuit configuration image (CSI).

## Patentansprüche

1. Tragbare Aufnahmevorrichtung (100) zur Aufzeichnung eines Prüfergebnisses für eine Wasserstoffstation, umfassend:
eine Bilderzeugungsvorrichtung (110), die dazu eingerichtet ist, ein Eingabebild, das dazu eingerichtet ist, eine Eingabe des Prüfergebnisses zu empfangen, und ein Schaltungskonfigurationsbild (CSI), das einen Teil einer Schaltungskonfiguration in der Wasserstoffstation darstellt, zu erzeugen;
einen Anzeigeabschnitt (120), der dazu eingerichtet ist, das Eingabebild und das Schaltungskonfigurationsbild (CSI) anzuzeigen; und
einen Speicher (150), in dem das Prüfergebnis gespeichert ist, das Prüfergebnis wurde unter Verwendung des auf dem Anzeigeabschnitt (120) angezeigten Eingabebildes eingegeben,
**dadurch gekennzeichnet, dass**
das Eingabebild Symbole (PB1-PB5, PC1-PC5), die jeweils vorbestimmte Prüfpunkte in der Wasserstoffstation darstellen, und Eingabefenster (IW1-IW5, IX1-IX5), die jeweils den Prüfpunkten entsprechend angezeigt werden, anzeigt, und
dass
wenn einer der auf dem Anzeigeabschnitt (120) angezeigten Prüfpunkte unter einem Betrieb für eines der Symbole (PB1-PB5, PC1-PC5) bestimmt wird, die Bilderzeugungsvorrichtung (110) dazu eingerichtet ist, das Schaltungskonfigurationsbild (CSI) zu erzeugen, sodass der bestimmte Prüfpunkt auf dem Anzeigeabschnitt (120) als der Teil der Schaltungskonfiguration angezeigt wird.

2. Tragbare Aufnahmevorrichtung (100) nach Anspruch 1,
wobei, wenn einer der auf dem Anzeigeabschnitt (120) angezeigten Prüfpunkte bestimmt wird, die Bilderzeugungsvorrichtung (110) bewirkt, dass der Anzeigeabschnitt (120) ein fotografisches Bild (PGI) eines Teils der Wasserstoffstation anzeigt, sodass der bestimmte Prüfpunkt in dem fotografischen Bild (PGI) beinhaltet ist.

3. Tragbare Aufnahmevorrichtung (100) nach Ansprüchen 1 oder 2,
wobei die Bilderzeugungsvorrichtung (110) dazu eingerichtet ist, ein Bereichsauswahlbild (IM2) zu erzeugen, das dazu eingerichtet ist, zuzulassen, dass ein Prüfer einen aus vorbestimmten Prüfbereichen auswählt, in die die Wasserstoffstation unterteilt ist,
wobei, wenn der ausgewählte Prüfbereich ein Kompressor der Wasserstoffstation ist, die Bilderzeugungsvorrichtung (110) dazu eingerichtet ist, ein Eingabebild für den Kompressor als das Eingabebild zu erzeugen, das Eingabebild für den Kompressor zeigt die Symbole (PB1-PB5, PC1-PC5), die jeweils die Prüfpunkte darstellen, die zum Prüfen des Kompressors eingestellt sind, und die Eingabefenster (IW1-IW5, IX1-IX5), die jeweils entsprechend den Prüfpunkten, die zum Prüfen des Kompressors eingestellt sind, angezeigt werden, an,
wobei, wenn der ausgewählte Prüfbereich ein Kühlschrank der Wasserstoffstation ist, die Bilderzeugungsvorrichtung (110) dazu eingerichtet ist, ein Eingabebild für den Kühlschrank als das Eingabebild zu erzeugen, das Eingabebild für den Kühlschrank zeigt die Symbole (PB1-PB5, PC1-PC5), die jeweils die Prüfpunkte darstellen, die zum Prüfen des Kühlschranks eingestellt sind, und die Eingabefenster (IW1-IW5, IX1-IX5), die jeweils entsprechend den Prüfpunkten, die zum Prüfen des Kühlschranks eingestellt sind, angezeigt werden, an, und
wobei, wenn der ausgewählte Prüfbereich ein Akkumulator der Wasserstoffstation ist, die Bilderzeugungsvorrichtung (110) dazu eingerichtet ist, ein Eingabebild für den Akkumulator als das Eingabebild zu erzeugen, das Eingabebild für den Akkumulator zeigt die Symbole (PB1-PB5, PC1-PC5), die jeweils die Prüfpunkte darstellen, die zum Prüfen des Akkumulators eingestellt sind, und die Eingabefenster (IW1-IW5, IX1-IX5), die jeweils entsprechend den Prüfpunkten, die zum Prüfen des Akkumulators eingestellt sind, angezeigt werden, an.

4. Tragbare Aufnahmevorrichtung (100) nach Ansprüchen 1 oder 2,
wobei die Bilderzeugungsvorrichtung (110) dazu eingerichtet ist, ein erstes Eingabebild (IP1) als das Eingabebild zu erzeugen, das erste Eingabebild (IP1) dazu eingerichtet ist, das Prüfergebnis über einen vorbestimmten ersten Prüfposten zu empfangen,
wobei das erste Eingabebild (IP1) die Symbole (PB1-PB5, PC1-PC5), die jeweils die Prüfpunkte darstellen, die für den ersten Prüfposten eingestellt sind, die Eingabefenster (IW1-IW5, IX1-IX5), die jeweils entsprechend den Prüfpunkten, die für den ersten Prüfposten eingestellt sind, angezeigt werden, und ein Fertigstellungsempfangsbild (CBI), das dazu eingerichtet ist, vom Prüfer eine Benachrichtigung zu empfangen, die Benachrichtigung stellt eine Fertigstellung einer Eingabe in alle Eingabefenster (IW1-IW5, IX1-IX5) für den ersten Prüfposten dar, beinhaltet, und
wobei die Bilderzeugungsvorrichtung (110) bewirkt, dass der Anzeigeabschnitt (120) eine Fehlermeldung anzeigt, wenn das Fertigstellungsempfangsbild (CBI) die Benachrichtigung vom Prüfer vor der Fertigstellung der Eingabe in alle Eingabefenster (IW1-IW5, IX1-IX5) für den ersten Prüfposten empfängt.

5. Tragbare Aufnahmevorrichtung (100) nach Anspruch 4,
wobei die Bilderzeugungsvorrichtung (110) dazu eingerichtet ist, ein zweites Eingabebild (IP2) als das Eingabebild zu erzeugen, das zweite Eingabebild (IP2) dient der Eingabe des Prüfergebnisses über einen vorbestimmten zweiten Prüfposten, der sich inhaltlich von dem ersten Prüfposten unterscheidet, und
wobei die Bilderzeugungsvorrichtung (110) bewirkt, dass der Anzeigeabschnitt (120) das zweite Eingabebild (IP2) anzeigt, wenn das Fertigstellungsempfangsbild (CBI) die Benachrichtigung vom Prüfer nach der Fertigstellung der Eingabe in alle Eingabefenster (IW1-IW5, IX1-IX5) für den ersten Prüfposten empfängt.

6. Tragbare Aufnahmevorrichtung (100) nach Anspruch 4, weiter umfassend:
einen Ausgabeabschnitt (160), der dazu eingerichtet ist, das Prüfergebnis auszugeben, das unter Verwendung des Eingabebilds eingegeben wurde,
wobei der Ausgabeabschnitt (160) dazu eingerichtet ist, das Prüfergebnis an eine externe Vorrichtung auszugeben, wenn das Fertigstellungsempfangsbild (CBI) die Benachrichtigung vom Prüfer nach der Fertigstellung der Eingabe in alle Eingabefenster (IW1-IW5, IX1-IX5) für den ersten Prüfposten empfängt.

7. Tragbare Aufnahmevorrichtung (100) nach einem der Ansprüche 1 bis 6,
wobei die Prüfpunkte in dem Eingabebild nach einer Anordnungsreihenfolge der Prüfpunkte im Schaltungskonfigurationsbild (CSI) angezeigt werden.

## Revendications

1. Appareil d'enregistrement portable (100) destiné à être utilisé pour enregistrer un résultat d'inspection d'une station d'hydrogène, comprenant :
un générateur d'images (110) configuré pour générer une image d'entrée, qui est configurée pour recevoir une entrée du résultat d'inspection, et une image de configuration de circuit (CSI) qui représente une partie d'une configuration de circuit dans la station d'hydrogène ;
une portion d'affichage (120) configurée pour afficher l'image d'entrée et l'image de configuration de circuit (CSI) ; et
une mémoire (150) dans laquelle le résultat d'inspection est stocké, le résultat d'inspection ayant été entré en utilisant l'image d'entrée qui est affichée sur la portion d'affichage (120),
**caractérisé en ce que**
l'image d'entrée montre des icônes (PB1-PB5, PC1-PC5) représentant des points d'inspection prédéterminés dans la station d'hydrogène, respectivement, et des fenêtres d'entrée (IW1-IW5, IX1-IX5) affichées en correspondance avec les points d'inspection, respectivement, et **en ce que**, lorsque l'un des points d'inspection affichés sur la portion d'affichage (120) est désigné dans le cadre d'une opération pour l'une des icônes (PB1-PB5, PC1-PC5), le générateur d'images (110) est configuré pour générer l'image de configuration de circuit (CSI) de sorte que le point d'inspection désigné soit affiché sur la portion d'affichage (120) en tant que partie de la configuration de circuit.

2. Appareil d'enregistrement portable (100) selon la revendication 1,
dans lequel, lorsque l'un des points d'inspection affichés sur la portion d'affichage (120) est désigné, le générateur d'images (110) amène la portion d'affichage (120) à afficher une image photographique (PGI) d'une partie de la station d'hydrogène de sorte que le point d'inspection désigné soit inclus dans l'image photographique (PGI).

3. Appareil d'enregistrement portable (100) selon la revendication 1 ou 2,
dans lequel le générateur d'images (110) est configuré pour générer une image de sélection de région (IM2) configurée pour permettre à un inspecteur de sélectionner l'une parmi des régions d'inspection prédéterminées en lesquelles la station d'hydrogène est divisée,
dans lequel, si la région d'inspection sélectionnée est un compresseur de la station d'hydrogène, le générateur d'images (110) est configuré pour générer une image d'entrée pour le compresseur comme image d'entrée, l'image d'entrée pour le compresseur montrant les icônes (PB1-PB5, PC1-PC5), qui représentent respectivement les points d'inspection définis pour inspecter le compresseur, et les fenêtres d'entrée (IW1-IW5, IX1-IX5) à afficher respectivement en correspondance avec les points d'inspection définis pour inspecter le compresseur,
dans lequel, si la région d'inspection sélectionnée est un réfrigérateur de la station d'hydrogène, le générateur d'images (110) est configuré pour générer une image d'entrée pour le réfrigérateur comme image d'entrée, l'image d'entrée pour le réfrigérateur montrant les icônes (PB1-PB5, PC1-PC5), qui représentent respectivement les points d'inspection définis pour inspecter le réfrigérateur, et les fenêtres d'entrée (IW1-IW5, IX1-IX5) à afficher respectivement en correspondance avec les points d'inspection définis pour inspecter le réfrigérateur, et
dans lequel, si la région d'inspection sélectionnée est un accumulateur de la station d'hydrogène, le générateur d'images (110) est configuré pour générer une image d'entrée pour l'accumulateur comme image d'entrée, l'image d'entrée pour l'accumulateur montrant les icônes (PB1-PB5, PC1-PC5), qui représentent respectivement les points d'inspection définis pour inspecter l'accumulateur, et les fenêtres d'entrée (IW1-IW5, IX1-IX5) à afficher respectivement en correspondance avec les points d'inspection définis pour inspecter l'accumulateur.

4. Appareil d'enregistrement portable (100) selon la revendication 1 ou 2,
dans lequel le générateur d'images (110) est configuré pour générer une première image d'entrée (IP1) comme image d'entrée, la première image d'entrée (IP1) étant configurée pour recevoir le résultat d'inspection concernant un premier élément d'inspection prédéterminé,
dans lequel la première image d'entrée (IP1) comporte les icônes (PB1-PB5, PC1-PC5), qui représentent respectivement les points d'inspection définis pour le premier élément d'inspection, les fenêtres d'entrée (IW1-IW5, IX1-IX5) à afficher respectivement en correspondance avec les points d'inspection définis pour le premier élément d'inspection, et une image de réception d'achèvement (CBI) configurée pour recevoir une notification d'un inspecteur, la notification représentant un achèvement de l'entrée dans toutes les fenêtres d'entrée (IW1-IW5, IX1-IX5) pour le premier élément d'inspection, et
dans lequel le générateur d'images (110) amène la portion d'affichage (120) à afficher un message d'erreur lorsque l'image de réception d'achèvement (CBI) reçoit la notification de l'inspecteur avant l'achèvement de l'entrée dans toutes les fenêtres d'entrée (IW1-IW5, IX1-IX5) pour le premier élément d'inspection.

5. Appareil d'enregistrement portable (100) selon la revendication 4,
dans lequel le générateur d'images (110) est configuré pour générer une deuxième image d'entrée (IP2) comme image d'entrée, la deuxième image d'entrée (IP2) étant utilisée pour entrer le résultat d'inspection concernant un deuxième élément d'inspection prédéterminé dont le contenu est différent de celui du premier élément d'inspection, et
dans lequel le générateur d'images (110) amène la portion d'affichage (120) à afficher la deuxième image d'entrée (IP2) lorsque l'image de réception d'achèvement (CBI) reçoit la notification de l'inspecteur après l'achèvement de l'entrée dans toutes les fenêtres d'entrée (IW1-IW5, IX1-IX5) pour le premier élément d'inspection.

6. Appareil d'enregistrement portable (100) selon la revendication 4, comprenant en outre :
une portion de sortie (160) configurée pour délivrer le résultat d'inspection qui a été entré en utilisant l'image d'entrée,
dans lequel la portion de sortie (160) est configurée pour délivrer le résultat d'inspection à un appareil externe lorsque l'image de réception d'achèvement (CBI) reçoit la notification de l'inspecteur après l'achèvement de l'entrée dans toutes les fenêtres d'entrée (IW1-IW5, IX1-IX5) pour le premier élément d'inspection.

7. Appareil d'enregistrement portable (100) selon l'une quelconque des revendications 1 à 6, dans lequel les points d'inspection dans l'image d'entrée sont affichés conformément à un ordre d'agencement des points d'inspection dans l'image de configuration de circuit (CSI).
